# EUROPEAN PATENT APPLICATION

(11) **EP 2 325 138 A2**
(43) Date of publication of application: **25.05.2011**
(21) Application number: 10251957.6
(22) Date of filing: 18.11.2010
(51) Int. Cl.: C01B 31/04, H01M 10/052

(54) **Conductive nanoparticle, conductive nanoparticle powder, and lithium battery comprising the powder**

(30) Priority: 18.11.2009 KR 20090111536
(71) Applicant: Samsung SDI Co., Ltd., Yongin-si, Gyeonggi-do (KR)
(72) Inventor: Lee, So-Ra, Yongin-si Gyeonggi-do (KR); Kim, Jae-Myung, Yongin-si Gyeonggi-do (KR); Joo, Kyu-Nam, Yongin-si Gyeonggi-do (KR); Kim, Young-Su, Yongin-si Gyeonggi-do (KR); Kim, Deok-Hyun, Yongin-si Gyeonggi-do (KR); Chung, Gu-Hyun, Yongin-si Gyeonggi-do (KR)
(74) Representative: Taor, Simon Edward William

(57) **Abstract**

A conductive nanoparticle, a conductive nanoparticle powder, and a lithium battery including the conductive nanoparticle powder. The nanoparticle has a structure in which n (2 to 100) polycyclic nano-sheets are stacked upon one another perpendicular with respect to a first plane, wherein each of the polycyclic nano-sheets includes hexagonal rings of six carbon atoms linked to each other, the hexagonal rings being fused to one another and arranged on the first plane.

## Description

### BACKGROUND

### Field

One or more embodiments relate to a material for lithium batteries and a lithium battery including the material.

### Description of the Related Technology

Lithium batteries have drawn attention for use as power sources for small portable electronic devices. Since lithium secondary batteries contain an organic electrolyte, they have a discharge voltage two times or greater than that of general batteries containing an aqueous alkali electrolyte, and thus have higher energy density.

Lithium-transition metal oxides, such as LiCoO₂, LiMn₂O₄, LiNi₁₋ₓCoₓO₂ (0 < x < 1), having a structure allowing intercalation of lithium ions may be used as positive active materials for lithium secondary batteries.

Carbonaceous materials in various forms, such as artificial graphite, natural graphite and hard carbon, which allow intercalation and deintercalation of lithium ions, and non-carbonaceous materials such as silicon (Si) have been studied for use as negative active materials. Such non-carbonaceous materials exhibit a very high capacitance density ten times or greater than that of graphite. However, the cycle lifetime characteristics thereof deteriorate due to volumetric expansion and shrinkage thereof during charging and discharging.

In addition, a conducting agent is sometimes used in order to provide conductivity to the positive and/or negative electrodes.

### SUMMARY

One or more embodiments include a conductive nanoparticle that may improve the capacity characteristics and charge/discharge efficiency of lithium batteries.

One or more embodiments include a conductive nanoparticle powder that may improve the capacity characteristics and charge/discharge efficiency of lithium batteries.

One or more embodiments include a lithium battery that contains the conductive nanoparticle powder, thereby having excellent capacity characteristics and charge/discharge efficiency.

Additional aspects will be set forth in part in the description which follows and, in part, will be apparent from the description, or may be learned by practice of the presented embodiments.

According to one or more embodiments, a conductive nanoparticle has a structure in which *n* polycyclic nano-sheets are stacked upon one another perpendicular with respect to a first plane, wherein each of the polycyclic nano-sheets includes hexagonal rings of six carbon atoms linked to each other, the hexagonal rings being fused to one another and arranged on the first plane, wherein n is an integer from 2 to 100; and, assuming that L₁ denotes a distance between a first carbon and a second carbon and L₂ denotes a distance between a third carbon and a fourth carbon arbitrarily selected from the n polycyclic nano-sheets so that the third and fourth carbons are neither identical to each other nor the same as the first and second carbons, and the first and second carbons are selected from the n polycyclic nano-sheets of the conductive nanoparticle 10 so that L₁≥L₂ and are positioned in a 3D x, y and z coordinate system so that the second carbon is located at B(a, b, c) with respect to the first carbon located at the origin A(0, 0, 0), a and b are each independently about 10µm or less, and c is about 100 nm or less.

Adjacent carbon atoms in the polycyclic nano-sheets may be linked via an sp² bond.

Each of the polycyclic nano-sheets may have a thickness in the range of (atomic diameter of carbon) ± 1 nm.

n may be an integer from 2 to 10.

c may be in the range of (atomic diameter of carbon X 50) ± about 10 nm.

c may be from about 0.1 nm to about 50 nm.

According to one or more embodiments, a conductive nanoparticle powder includes a plurality of conductive nanoparticles having a structure in which n polycyclic nano-sheets are stacked upon one another perpendicular with respect to a first plane, wherein each of the polycyclic nano-sheets includes hexagonal rings of six carbon atoms linked to each other, the hexagonal rings being fused to one another and arranged on the first plane, wherein n is an integer from 2 to 100; and, assuming that L₁ denotes a distance between a first carbon and a second carbon and L₂ denotes a distance between a third carbon and a fourth carbon arbitrarily selected from the *n* polycyclic nano-sheets so that the third and fourth carbons are neither identical to each other nor the same as the first and second carbons, and the first and second carbons are selected from the n polycyclic nano-sheets of the conductive nanoparticle so that L₁≥L₂ and are positioned in a 3D x, y and z coordinate system so that the second carbon is located at B(a, b, c) with respect to the first carbon located at the origin A(0, 0, 0), a and b are each independently about 10µm or less, and c is about 100 nm or less.

The d₅₀ of c may be in the range of (atomic diameter X 50) ± about 10 nm.

The d₅₀ of c may be from about 0.1 nm to about 50 nm.

According to one or more embodiments, a lithium battery includes: a positive electrode containing a positive active material; a negative electrode containing a negative active material; and an electrolyte, wherein at least one of the positive electrode and the negative electrode includes a conducting agent containing the conductive nanoparticle powder described above.

The conducting agent may further include at least one first material selected from the group consisting of carbon black, ketchen black, acetylene black, artificial graphite, natural graphite, copper powder, nickel powder, aluminum powder, silver powder, and polyphenylene.

One of the positive active material and the negative active material may include a lithium titanate.
According to a first aspect of the invention, there is provided a conductive nanoparticle as set out in claim 1. Prefered features are set out in claims 2 to 7.
According to a second aspect of the invention, there is provided a conductive nanoparticle powder as set out in claim 9. Prefered features are set out in claim 10.
According to a third aspect of the invention, there is provided a lithium battery as set out in claim 11. Prefered features are set out in claims 12 to 15.

### BRIEF DESCRIPTION OF THE DRAWINGS

These and/or other aspects will become apparent and more readily appreciated from the following description of the embodiments, taken in conjunction with the accompanying drawings of which:

FIG. 1 is a schematic diagram of a conductive nanoparticle according to an embodiment;

FIG. 2 is a molecular level enlarged diagram of a region T₁ delimited by a dotted line in FIG. 1;

FIG. 3 is an enlarged diagram of a region T₂ delimited by a dotted line in FIG. 1;

FIG. 4 is a schematic diagram of first and second carbons in a 3D x, y, z coordinate system, wherein the second carbon is located at B(a, b, c) with respect to the first carbon located at the origin A(0,0,0), and the first and second carbons are superimposed on apexes of a virtual hexahedron to be described so that the distance between them is the largest.

FIG. 5 is an exploded perspective view of a lithium battery according to an embodiment;

FIG. 6A is a scanning electron microscopic (SEM) image of a conductive nanoparticle powder prepared according to Preparation Example 1;

FIG. 6B is a transmission electron microscopic (TEM) image of the conductive nanoparticle of Preparation Example 1;

FIG. 7 is a graph of particle size dispersity of the conductive nanoparticle powder of Preparation Example 1;

FIG. 8 is a graph illustrating the capacity characteristics of lithium batteries manufactured according to Example 1 and Comparative Example 1; and

FIG. 9 is a graph illustrating the charge/discharge efficiencies of the lithium batteries of Example 1 and Comparative Example 1.

### DETAILED DESCRIPTION

Reference will now be made in detail to embodiments, examples of which are illustrated in the accompanying drawings. In this regard, the present embodiments may have different forms and should not be construed as being limited to the descriptions set forth herein. Accordingly, the embodiments are merely described below, by referring to the figures, to explain aspects of the present description.

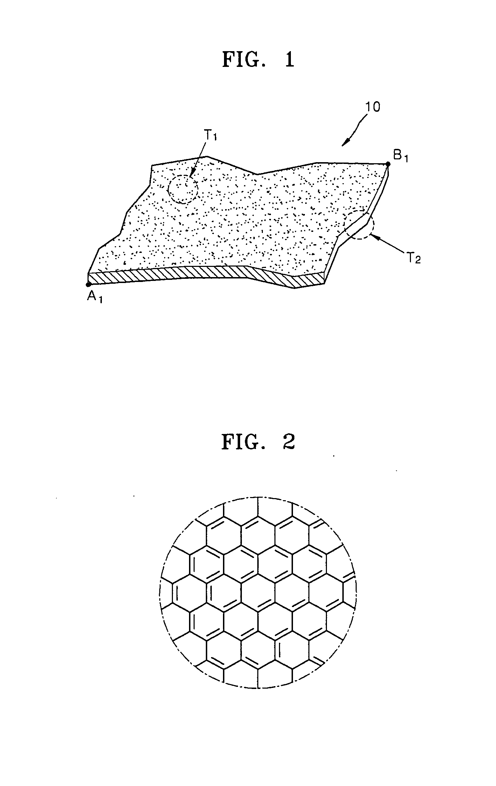

FIG. 1 is a schematic diagram of a conductive nanoparticle 10 according to an embodiment.

The conductive nanoparticle 10 may have an irregular shape, but generally has a "planar" shape. Nevertheless, the conductive nanoparticle 10 may have various shapes, for example, it may be bent or have a rolled end. The "planar" shape of the conductive nanoparticle 10 will be more clearly understood based on the description of the conductive nanoparticle 10 described below with reference to FIGS. 1 through 4 and FIGS. 6A and 6B.

The conductive nanoparticle 10 has a structure in which n polycyclic nano-sheets are stacked upon one another perpendicular with respect to a first plane, wherein each of the polycyclic nano-sheets includes hexagonal rings of six carbon atoms linked to each other, the hexagonal rings being fused to one another and arranged on the first plane.

Throughout the specification the wording "a hexagonal ring of six carbon atoms linked to each other" refers to a hexagonal ring including carbon atoms at respective apexes of a hexagon. Hereinafter, this term may be referred to as a "six-member carbocyclic ring". Each of the polycyclic nano-sheets includes a plurality of six-member carbocyclic rings fused to one another, thereby forming a honeycomb structure having a form of a single layer in which the six-member carbocyclic rings are arranged on the first plane. In this regard, "the arrangement of six-member carbocyclic rings on the(a) first plane" indicates the arrangement and extension of the six-member carbocyclic rings in a lateral direction by fusing, and does not indicate the arrangement and extension thereof in a longitudinal direction. The structure of hexagonal rings of six carbon atoms linked to each other in which the hexagonal rings are fused to one another and arranged on the first plane will be more clearly understood from FIG. 2. FIG. 2 is a molecular level enlarged diagram of a region T₁ delimited by a dotted line in FIG. 1. Referring to FIG. 2, the plurality of six-member carbocyclic rings are fused to each other, thereby forming a honeycomb structure having a form of a single layer in which the six-member carbocyclic rings are arranged and extended in a lateral direction without a space therebetween. It is obvious to one of ordinary skill in the art that carbon atoms are positioned at respective apexes of each of the six-member carbocyclic rings.

Adjacent carbon atoms in the polycyclic nano-sheets are linked via an sp² bond. Thus, a resonance structure is formed in the six-member carbocyclic rings, thereby facilitating migration of electrons.

The polycyclic nano-sheets have a structure in which a plurality of six-member carbocyclic rings are fused to each other and arranged on the first plane. Thus, each of the polycyclic nano-sheets may have, for example, a thickness which is that of the atomic diameter of carbon plus or minus one nanometer (± 1 nm). In some embodiments, the atomic diameter of carbon is 0.154 nm. In this regard, the thickness of a polycyclic nano-sheet in the range of the atomic diameter of carbon "plus or minus 1 nm (±1 nm)" means that the polycyclic nano-sheet may be bent, have a rolled end, or be partially broken.

As described above, the conductive nanoparticle 10 has a structure in which *n* polycyclic nano-sheets are stacked upon one another. In this regard, the *n* polycyclic nano-sheets are stacked upon one another perpendicularly with respect to the first plane on which the plurality of six-member carbocyclic rings fused to each other are arranged.

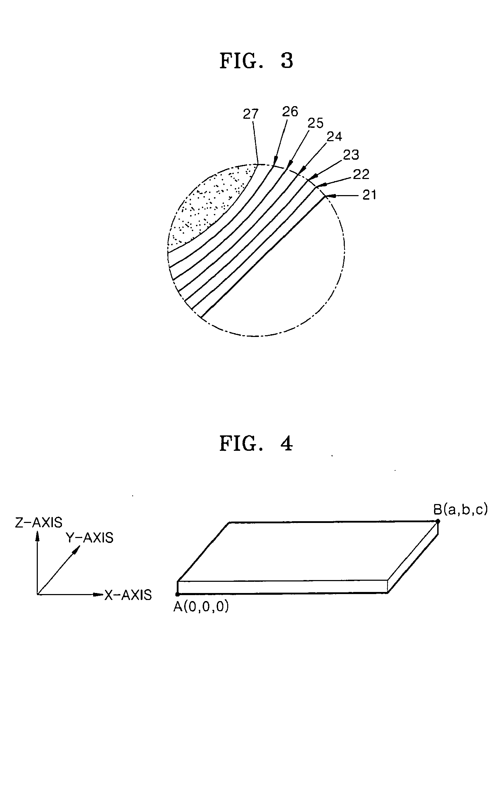

The above-described structure of the conductive nanoparticle 10 will be more clearly understood from FIGS. 2 and 3 showing an enlarged diagram of a region T₂ in FIG. 1. The *n* polycyclic nano-sheets may include a first polycyclic nano-sheet, a second polycyclic nano-sheet, a third polycyclic nano-sheet, ..., a (n-2)^{th} polycyclic nano-sheet, a (n-1)^{th} polycyclic nano-sheet, and an n^{th} polycyclic nano-sheet stacked upon one another in this order. The embodiment shown in FIG. 1 includes a conductive nanoparticle which includes n polycyclic nano-sheets, wherein n=7. Referring to FIG. 3, the conductive nanoparticle 10 has a structure in which a first polycyclic nano-sheet 21, a second polycyclic nano-sheet 22, a third polycyclic nano-sheet 23, a fourth polycyclic nano-sheet 24, a fifth polycyclic nano-sheet 25, a sixth polycyclic nano-sheet 26 and a seventh polycyclic nano-sheet 27 are sequentially stacked upon one. The first polycyclic nano-sheet 21 through the seventh polycyclic nano-sheet 27 are stacked perpendicular to the first plane on which a plurality of six-member carbocyclic rings are fused to each other and arranged as illustrated in FIG. 2.

In some embodiments, n may be an integer from 2 to 100. For example, n may be an integer from 2 to 80, an integer from 2 to 70, an integer from 2 to 40, in integer from 2 to 20, or an integer from 2 to 10.

Assuming that L₁ denotes a distance between a first carbon and a second carbon and L₂ denotes a distance between a third carbon and a fourth carbon arbitrarily selected from the *n* polycyclic nano-sheets so that the third and fourth carbons are neither identical to each other nor the same as the first and second carbons, and the first and second carbons are selected from the *n* polycyclic nano-sheets of the conductive nanoparticle 10 so that L₁-L₂ and are positioned in a 3D x, y and z coordinate system so that the second carbon is located at B(a, b, c) with respect to the first carbon located at the origin A(0, 0, 0), a and b may be each independently about 10µm or less, and c may be about 100 nm or less. The first and second carbons are two carbons with the largest distance therebetween from among all carbons in the n polycyclic nano-sheets.

For example, in the conductive nanoparticle 10 of FIG. 1, the first carbon may be located at A₁ and the second carbon may be located at B₁. FIG. 4 is a schematic diagram of the first and second carbons selected from the polycyclic nano-sheets in a 3D x, y and z coordinate system. The second carbon is located at B(a, b, c) with respect to the first carbon located at the origin A(0, 0, 0), and the first and second carbons are superimposed on apexes of a virtual hexahedron to be described so that the distance between the A and the B is the largest. Herein, a, b and c correspond to a width, a length, and a height of the virtual hexahedron, respectively, which may be construed as a container in which the conductive nanoparticle 10 of FIG. 1 is compactly accommodated.

In this case, a and b may be each independently about 10µm or less, for example, in a range of about 1µm to about 10µm.

In addition, c may be in the range of (atomic diameter of carbon X 50) ± about 10 nm. In this regard, "(atomic diameter of carbon X 50)", i.e., fifty times the atomic diameter of carbon, means that the conductive nanoparticle 10 may include a maximum number of fifty polycyclic nano-sheets. The "±about 10 nm" means that the conductive nanoparticle 10 may be bent, have a rolled end, or be partially broken.

In particular, c may be about 100 nm or less. For example, c may be in from about 0.1 nm to about 100 nm, about 0.1 nm to about 90 nm, about 0.1 nm to about 50 nm, or about 0.1 nm to about 20 nm, but is not limited thereto. Also, c may be about 17.7nm or less, or c may be from about 0.1nm to about 17.7nm, but is not limited thereto.

If a, b and c of the conductive nanoparticle 10 are within the ranges above, although the present embodiments are not limited to any particular principle, the transfer of electrons in the conductive nanoparticle 10 may be facilitated, and thus, the conductive nanoparticle 10 may have excellent conductivity.

According to an aspect of the present embodiments, a conductive nanoparticle powder includes a plurality of conductive nanoparticles. Individual conductive nanoparticles of the conductive nanoparticle powder are described in detail above.

The plurality of conductive nanoparticles of the conductive nanoparticle powder may have different sizes and shapes. Thus, the conductive nanoparticle powder may be defined based on the above description of the conductive nanoparticle and a particle size dispersity of the conductive nanoparticle powder. For example, each of the conductive nanoparticles of the conductive nanoparticle powder has dimensions of a, b, and c as defined above, wherein the particle size dispersity of the conductive nanoparticle powder may be defined by d₅₀ of each of a, b, and c of the conductive nanoparticles. The definition of the d₅₀ is well known by one of ordinary skill in the art, and thus a description thereof will not be provided here.

The d₅₀ of each of a and b of the conductive nanoparticle powder may be independently from about 10µm or less, for example, from about 1µm to about 10µm.

The d₅₀ of c of the conductive nanoparticle powder may be in the range of (atomic diameter of carbon X 50) ±about 10 nm. In this regard, "(atomic diameter of carbon X 50) ", i.e., fifty times the atomic diameter of carbon, means that each of the conductive nanoparticles of the conductive nanoparticle powder may include a maximum number of fifty polycyclic nano-sheets. The "±about 10 nm" means that each of the conductive nanoparticles of the conductive nanoparticle powder may be bent, have a rolled end, or be partially broken.

The d₅₀ of c of the conductive nanoparticle powder may be about 100 nm or less. For example, the d₅₀ of c of the conductive nanoparticle powder may be from about 0.1 nm to about 100 nm, about 0.1 nm to about 90 nm, about 0.1 nm to about 50 nm, or about 0.1 nm to about 20 nm, but is not limited thereto. Also, d₅₀ of c of the conductive nanoparticle powder may be about 17.7nm or less, or d₅₀ of c of the conductive nanoparticle powder may be from about 0.1nm to about 17.7nm, but is not limited thereto.

The conductive nanoparticle powder may have a conductivity of from about 700 to about 1,500 S/cm, or from about 1,000 to about 1,200 S/cm based on 2.5 g/cc of the conductive nanoparticle powder, but is not limited thereto. If the conductivity of the conductive nanoparticle powder is within this range, the conductive nanoparticle powder may be suitable for use as a conducting agent for lithium batteries.

The conductive nanoparticle powder may be prepared using graphite as a starting material. For example, a method of preparing the conductive nanoparticle powder may involve expanding graphite, adding a solvent to the expanded graphite and grinding the expanded graphite in the solvent, and removing the solvent from the ground product. The method will now be described in more detail below.

Initially, graphite is heated to expand, followed by removing gas generated during the heating. In this regard, a starting material may be expanded graphite, but is not limited thereto. For example, a heating temperature for expanding the graphite may be from about 400°C to about 600°C, and a heating time may be from about 30 minutes to about 2 hours, but are not limited thereto. When the heating temperature and the heating time are within these ranges, the binding of carbon atoms may not be substantially damaged, and the graphite may expand to the extent that "c" of the conductive nanoparticle or "d₅₀ of c" of the conductive nanoparticle powder may be within the ranges defined above.

Next, optionally, gas generated when the graphite expands may be removed. The gas may be an oxide generated by combination of impurities (for example, non-carbonic atoms or molecules) present in the graphite with oxygen. For example, the gas may be SO₂, but is not limited thereto. In the heating of the graphite to expand, such impurities present in the graphite may be sintered to remove them. Thus, the conductive nanoparticle powder may have an improved purity.

Next, the solvent is added to the expanded graphite, and then the expanded graphite in the solvent is ground. The solvent may be any solvent that may not substantially react with the expanded graphite and cause the expanded graphite to flow. For example, the solvent may be an alcohol, such as ethanol, but is not limited thereto.

The expanded graphite in the solvent may be ground in various ways, for example, using a homogenizer or a microfluidizer. The grinding may be repeatedly performed several times. For example, the grinding may be performed two or more times using a combination of grinding methods. The grinding may be performed in various ways. For example, the expanded graphite may be mixed with any acid before being ground. For example, at least one of a and b of the conductive nanoparticle may be adjusted by varying the number of grinding processes performed using a microfluidizer, but the present embodiments are not limited thereto.

Next, the solvent is removed to obtain the conductive nanoparticle powder. The solvent may be removed in various ways. However, the physical characteristics of the solvent should be considered to select a suitable method. For example, the ground product may be filtered, washed, and then thermally treated at 80°C.

According to another aspect of the present embodiments, a lithium battery includes a positive electrode containing a positive active material, a negative electrode containing a negative active material, and an electrolyte, wherein at least one of the positive electrode and the negative electrode includes a conducting agent containing the conductive nanoparticle or the conductive nanoparticle powder described above. The lithium battery may have improved capacity characteristics and charge/discharge efficiency since the conductive nanoparticle powder has excellent conductivity.

The conductive nanoparticle powder may be present in at least one of a positive active material layer and a negative active material layer in various forms. For example, the conductive nanoparticle powder may be present as a mixture with at least one of the positive electrode negative electrode material and the negative active material, or may be coated on a partial or entire surface of at least one of the positive active material and the negative active material.

The conducting agent may further include, in addition to the conductive nanoparticle powder described above, at least one first material selected from the group consisting of carbon black, ketchen black, acetylene black, artificial graphite, natural graphite, copper powder, nickel powder, aluminum powder, silver powder, and polyphenylene.

When the conducting agent further includes a first material, a weight ratio of the first material to the conductive nanoparticle powder may be from about 1:10 to about 10:1. The weight ratio of the first material to the conductive nanoparticle powder may be appropriately selected within the above range by taking into account the desired characteristics of the lithium battery.

For example, the conducting agent may further include carbon black. In this regard, a weight ratio of the carbon black to the conductive nanoparticle powder may be from about 1:10 to about 10:1, from about 7:3 to about 3:7, or about 6:4.

The positive electrode may include a current collector and a positive active material layer formed on the current collector. A compound (lithiated intercalation compound) which allows reversible intercalation and deintercalation of lithium may be used as the positive active material for forming the positive active material layer. Examples of the positive active material may include compounds represented by the following formulae.

LiₐA_{1-b}X_{b}D₂ (wherein 0.95 ≤ a ≤ 1.1, and 0 ≤ b ≤ 0.5); LiₐE_{1-b}X_{b}O_{2-c}D_{c} (wherein 0.95 ≤ a ≤ 1.1, 0 ≤ b ≤ 0.5, and 0 ≤ c ≤ 0.05); LiE_{2-b}X_{b}O_{4-c}D_{c} (wherein 0 ≤ b ≤ 0.5, and 0 ≤ c ≤ 0.05); LiₐNi_{1-b-c}Co_{b}BcD_{α} (wherein 0.95 ≤ a ≤ 1.1, 0 ≤ b ≤ 0.5, 0 ≤ c ≤ 0.05, and 0 < a ≤ 2); LiₐNi_{1-b-c}Co_{b}X_{c}O_{2-α}M_{α}, (wherein 0.95 ≤ a ≤ 1.1, 0 ≤ b ≤ 0.5, 0 ≤ c ≤ 0.05, and 0 < α < 2); LiₐNi_{1-b-c}Co_{b}X_{c}O_{2-α}M₂ (wherein 0.95 ≤ a ≤ 1.1, 0 ≤ b ≤ 0.5, 0 ≤ c ≤ 0.05, and 0 < α < 2); LiₐNi_{1-b-c}mn_{b}X_{c}D_{α} (wherein 0.95 ≤ a ≤ 1.1, 0 ≤ b ≤ 0.5, 0 ≤ c ≤ 0.05, and 0 < α ≤ 2); LiₐNi_{1-b-c}Mn_{b}XₑO_{2-α}M_{α} (wherein 0.95 ≤ a ≤ 1.1, 0 ≤ b ≤ 0.5, 0 ≤ c ≤ 0.05, and 0 < α < 2); LiₐNi_{1-b-c}Mn_{b}X_{c}O_{2-α}M₂ (wherein 0.95 ≤ a ≤ 1.1, 0 ≤ b ≤ 0.5, 0 ≤ c ≤ 0.05, and 0 < α < 2); LiₐNi_{b}E_{c}G_{d}O₂ (wherein 0.90 ≤ a ≤ 1.1, 0 ≤ b ≤ 0.9, 0 ≤ c ≤ 0.5, and 0.001 ≤ d ≤ 0.1); LiₐNi_{b}Co_{c}Mn_{d}GₑO₂ (wherein 0.90 ≤ a ≤ 1.1, 0 ≤ b ≤ 0.9, 0 ≤ c ≤ 0.5, 0 ≤ d ≤0.5, 0 ≤ e ≤ 0.1); LiₐNiG_{b}O₂ (wherein 0.90 ≤ a ≤ 1.1, and 0.001 ≤ b ≤ 0.1); LiₐCoG_{b}O₂ (wherein 0.90 ≤ a ≤ 1.1, and 0.001 ≤ b ≤ 0.1); LiₐMnG_{b}O₂ (wherein 0.90 ≤ a ≤ 1.1, and 0.001 ≤ b ≤ 0.1); LiₐMn₂G_{b}O₄ (wherein 0.90 ≤ a ≤ 1.1, and 0 ≤ b ≤ 0.1); QO₂; QS₂; LiQS₂; V₂O₅; LiV₂O₅; LiZO₂; LiNiVO₄; Li_{(3-f)}J₂(PO₄)₃(0 ≤ f ≤ 2); Li_{(3-f)}Fe₂(PO₄)₃(0 ≤ f ≤ 2); LiFePO₄; and lithium titanate.

In the above formulae, A is selected from the group consisting of nickel (Ni), cobalt (Co), manganese (Mn), and combinations thereof; X is selected from the group consisting of aluminum (Al), nickel (Ni), cobalt (Co), manganese (Mn), chromium (Cr), iron (Fe), magnesium (Mg), strontium (Sr), vanadium (V), a rare earth element, and combinations thereof; D is selected from the group consisting of oxygen (O), fluorine (F), sulfur (S), phosphorus (P), and combinations thereof; E is selected from the group consisting of cobalt (Co), manganese (Mn), and combinations thereof; M is selected from the group consisting of fluorine (F), sulfur (S), phosphorus (P), and combinations thereof; G is selected from the group consisting of aluminum (Al), chromium (Cr), manganese (Mn), iron (Fe), magnesium (Mg), lanthanum (La), cerium (Ce), strontium (Sr), vanadium (V), and combinations thereof; Q is selected from the group consisting of titanium (Ti), molybdenum (Mo), manganese (Mn), and combinations thereof; Z is selected from the group consisting of chromium (Cr), vanadium (V), iron (Fe), scandium (Sc), yttrium (Y), and combinations thereof; and J is selected from the group consisting of vanadium (V), chromium (Cr), manganese (Mn), cobalt (Co), nickel (Ni), copper (Co), and combinations thereof.

For example, the positive active material may be a lithium titanate.

Examples of the lithium titanate include a spinel-structured lithium titanate, an anatase-structured lithium titanate, and a ramsdellite-structured lithium titanate, which are classified according to the crystal structure thereof.

The positive active material may be represented by Li₄₋ₓTi₅O₁₂ (0≤x≤3). For example, the positive active material may be Li₄Ti₅O_{12,} but is not limited thereto.

Alternatively, examples of the positive active material include LiₐNi_{b}Co_{c}Mn_{d}GₑO₂ (wherein 0.90 ≤ a ≤ 1.1, 0 ≤ b ≤ 0.9, 0 ≤ c ≤ 0.5, 0 ≤ d ≤ 0.5, and e = 0, and for example, a=1, b=0.5, c=0.2, d=0.3, and e=0), and LiMn₂O₄, but are not limited thereto.

Meanwhile, a lithium electrode may be used as the positive electrode. In this case, the cell using the lithium electrode as the positive electrode is referred to as a half cell.

The compounds listed above as positive active materials may have a surface coating layer (hereinafter, "coating layer"). Alternatively, a mixture of a compound without having a coating layer and a compound having a coating layer, the compounds being selected from the compounds listed above, may be used. The coating layer may include at least one compound of a coating element selected from the group consisting of oxides, hydroxides, oxyhydroxides, oxycarbonates, and hydroxycarbonates of the coating element. The compounds for the coating layer may be amorphous or crystalline. The coating element contained in the coating layer may be magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or mixtures thereof.

The coating layer may be formed using any method, for example, a spray coating method, a dipping method, or the like, which does not adversely affect the physical properties of the positive active material when a compound of such a coating element is used. This is obvious to one of ordinary skill in the art, and thus a detailed description thereof will not be provided.

The positive active material layer may further include a binder.

The binder functions to strongly bind positive active material particles together and to a current collector. Examples of the binder include polymers, including polyvinyl alcohol, carboxymethyl cellulose, hydroxypropyl cellulose, diacetyl cellulose, polyvinyl chloride, carboxylated polyvinyl chloride, polyvinyl fluoride, and ethylene oxide, polyvinylpyrrolidone, polyurethane, polytetrafluoroethylene, polyvinylidene fluoride, polyethylene, polypropylene, styrene-butadiene rubber (SBR), acrylated SBR, epoxy resin, and nylon, but are not limited thereto.

Al may be used for the current collector, but the present embodiments are not limited thereto.

The positive electrode may be manufactured by mixing the positive active material and the binder (and further the conducting agent, optionally) in a solvent to prepare a positive active material composition and by coating the positive active material composition on the current collector. The method of manufacturing the positive electrode is obvious to one of ordinary skill in the art, and thus a detailed description thereof will not be provided. N-methylpyrrolidione may be used as the solvent, but is not limited thereto.

Natural graphite, a silicon/carbon complex (SiOₓ), silicon metal, silicon thin film, lithium metal, a lithium alloy, a carbonaceous material or graphite may be used as the negative active material. For example, the lithium alloy may be a lithium titanate. Examples of the lithium titanate include a spinel-structured lithium titanate, an anatase-structured lithium titanate, and a ramsdellite-structured lithium titanate, which are classified according to the crystal structure thereof. The negative active material may be represented by Li₄₋ₓTi₅O₁₂(0≤x≤3). For example, the negative active material may be Li₄Ti₅O₁₂, but is not limited thereto.

A binder and a solvent used in a negative active material composition may be the same as those used in the positive active material composition. The conducting agent that may be optionally included in the negative active material composition is described in detail above in connection with the positive active material composition. If desired, a plasticizer may be further added to the positive active material composition and/or the negative active material composition to form pores in electrode plates.

The electrolyte may include a nonaqueous organic solvent and a lithium salt.

The nonaqueous organic solvent may function as a migration medium of ions involved in electrochemical reactions in batteries.

Examples of the nonaqueous organic solvent may include carbonates, esters, ethers, alcohols, and aprotic solvents. Examples of the carbonates available as the nonaqueous organic solvent may include dimethyl carbonate (DMC), diethyl carbonate (DEC), dipropyl carbonate (DPC), methylpropyl carbonate (MPC), ethylpropyl carbonate (EPC), ethyl methyl carbonate (EMC), ethylene carbonate (EC), propylene carbonate (PC), butylene carbonate BC), and methyl ethyl carbonate (MEC). Examples of the esters available as the nonaqueous organic solvents may include methyl acetate, ethyl acetate, n-propyl acetate, dimethyl acetate, methyl propionate, ethyl propionate, γ-butyrrolactone, decanolide, valerolactone, mevalonolactone, and caprolactone. Examples of the ethers available as the nonaqueous organic solvent may include dibutyl ether, tetraglyme, diglyme, dimethoxyethane, 2-methyltetrahydrofuran, and tetrahydrofuran. An example of the ketones available as the nonaqueous organic solvent may be cyclohexanone. Examples of the alcohols available as the nonaqueous organic solvent may include ethyl alcohol, isopropyl alcohol, and the like. Examples of the non-protonic solvents may include nitrils, such as R-CN (wherein R is a straight, branched or cyclic C₂-C₂₀ hydrocarbon group, which may have a double-bonded aromatic ring or an ether bond); amides, such as dimethylformamide; dioxolanes, such as 1,3-dioxolane; and sulfolanes.

The nonaqueous organic solvent may be used alone. Alternatively, at least two of the nonaqueous organic solvents may be used in combination. In this case, a mixing ratio of the at least two of the nonacqueous organic solvents may appropriately vary according to the performance of the battery, which is obvious to one of ordinary skill in the art.

The lithium salt is dissolved in the organic solvent and functions as a source of lithium ions in the battery, enabling the basic operation of the lithium battery. In addition, the lithium salt facilitates the migration of lithium ions between the positive electrode and the negative electrode. Examples of the lithium salt may include at least one supporting electrolyte salt selected from the group consisting of LiPF₆, LiBF₄, LiSbF₆, LiAsF₆, LiN(SO₂C₂F₅)₂, Li(CF₃SO₂)₂N, LiC₄F₉SO₃, LiClO₄, LiAlO₂, LiAlCl₄, LiN(CₓF₂ₓ₊₁SO₂)(C_{y}F_{2y+})SO₂) (wherein x and y are natural numbers), LiCl, LiI, and LiB(C₂O₄)₂(LiBOB; lithium bis(oxalato) borate). The concentration of the lithium salt may be from about 0.1 to about 2.0M. If the concentration of the lithium salt is within this range, the electrolyte may have an appropriate conductivity and viscosity, and thus may exhibit excellent performance, allowing lithium ions to effectively migrate.

A separator may be disposed between the positive electrode and the negative electrode according to the type of the lithium battery. The separator may be a monolayer or a multilayer including at least two layers formed of polyethylene, polypropylene, or polyvinylidene fluoride. The multilayer may be a mixed multilayer. For example, the separator may be a two-layered separator including polyethylene and polypropylene layers, a three-layered separator including polyethylene, polypropylene and polyethylene layers, or a three-layered separator including polypropylene, polyethylene and polypropylene layers.

Lithium batteries may be classified into lithium ion batteries, lithium ion polymer batteries, and lithium polymer batteries according to the types of a separator and electrolyte. In addition, lithium batteries may be classified into a cylindrical type, a rectangular type, a coin type, and a pouch type according to the shape of battery, and may also be classified into a bulk type and a thin film type according to the size of battery. Lithium batteries may be used either as primary lithium batteries or secondary lithium batteries. A method of manufacturing a lithium battery is widely known in the field, and a detailed description thereof will not be provided here.

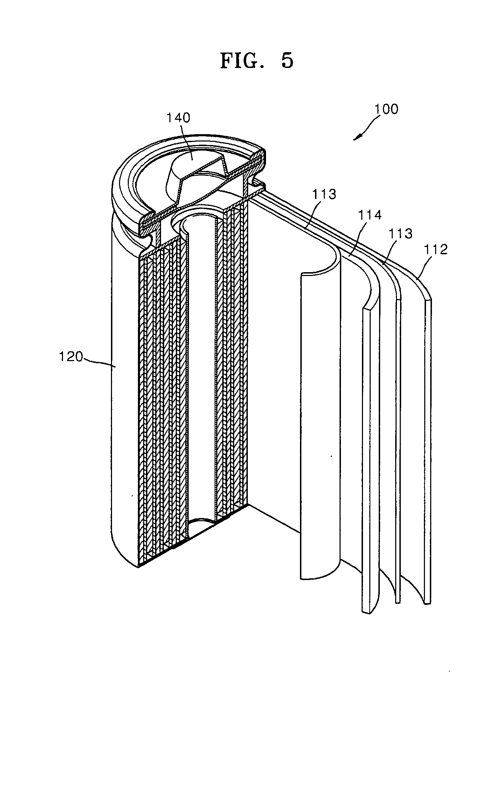

FIG. 5 is a schematic view of a structure of a lithium battery 100 according to an embodiment. Referring to FIG. 5, the lithium battery 100 according to the present embodiment includes a positive electrode 114, a negative electrode 112 and a separator 113 disposed between the positive electrode 114 and the negative electrode 112, and an electrolyte (not shown) impregnated into the positive electrode 114, the negative electrode 112 and the separator 113, a battery case 120, and a sealing member 140 for sealing the case 120. The lithium battery 100 is manufactured by sequentially stacking the positive electrode 114, the negative electrode 112 and the senator 113 to form a stack, winding the stack in a spiral form, and accommodating the wound stack in the battery case 120.

Hereinafter, one or more embodiments will be described in detail with reference to the following examples. However, these examples are not intended to limit the purpose and scope of the present embodiments.

### EXAMPLES

### Preparation Example 1

100 g of expanded graphite was heated at 500°C for 1 hour to expand, and a gas generated during the heating was exhausted through a ventilation hole to obtain a expanded graphite product. The expanded graphite product was dispersed in ethanol and ground using a homogenizer at 10,000 rpm for 10 minutes to obtain a ground mixture. The ground mixture was further ground using a microfluidizer, filtered using filtering equipment, washed with ethanol, and dried in an oven at 120°C to obtain conductive nanoparticle powder.

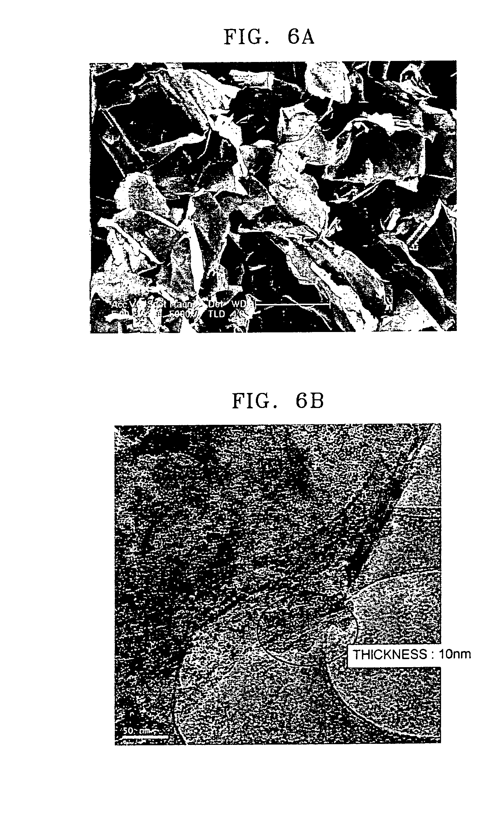

FIG. 6A is a scanning electron microscopic (SEM) image of the conductive nanoparticle powder. Referring to FIG. 6A, it can be seen that individual conductive nanoparticles of the conductive nanoparticle powder basically had planar shapes.

FIG. 6B is a transmission electron microscopic (TEM) image of conductive nanoparticles of the conductive nanoparticle powder. Referring to FIG. 6B, as can be seen in a region delimited by a dotted circle, which corresponds to the region T₂ in FIG. 1, the conductive nanoparticles had a thickness of about 10 nm. As identified in FIG. 6B, the conductive nanoparticles of the conductive nanoparticle powder prepared as described above had a "c" of about 10 nm, wherein "c" is defined above in connection with FIGS. 1 and 4.

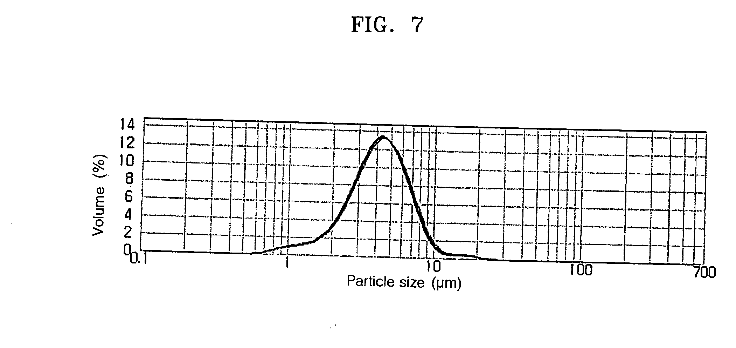

In addition, a particle size dispersity of the conductive nanoparticle powder was measured using a Hydro2000 (Malvern Instruments Ltd.). The results are shown in FIG. 7. Referring to FIG. 7, d₁₀, d₅₀ and d₉₀ of "a" or "b" of the conductive nanoparticle powder were 2.1 µm, 4.11µm and 7.16 µm, respectively, wherein "a" and "b" are defined above in connection with FIGS. 1 and 4.

### Example 1

Li₄Ti₅O₁₂ as a positive active material, polyvinylidene fluoride (PVDF) as a binder, and a mixture of carbon black (available from Denka) and the conductive nanoparticle powder of Preparation Example 1 as a conducting agent were mixed in a weight ratio of 90:5:5 in N-methylpyrrolidone used as a solvent to prepare a positive electrode slurry. A weight ratio of the carbon black and the conductive nanoparticle powder in the mixture used as the conducting agent was adjusted to 3:2. The positive electrode slurry was coated on an aluminum (Al)-foil to form a thin positive electrode plate having a thickness of 90µm, dried at 135°C for 3 hours or longer, and pressed to a thickness 70µm. The resulting positive electrode plate was punched into a circular piece having a size of 13ϕ, and a weight thereof was recorded. The circular piece was used to form a positive electrode having a shape suitable for welding, and a weight of the positive electrode was recorded. The positive electrode was welded to a bottom of a 2032 coin cell and evacuated in a vacuum oven at 250°C for 5 hours. Next, a lithium electrode (negative electrode), a polyethylene separator having a thickness of 20µm, and an electrolyte (containing a mixture of ethylene carbonate (EC) and ethylmethyl carbonate (EMC) in a volume ratio of 3:7 and 1.3M LiPF₆) were assembled to manufacture a lithium battery.

### Comparative Example 1

A lithium battery was manufactured in the same manner as in Example 1, except that only carbon black was used as a conducting agent, instead of the mixture of carbon black and the conductive nanoparticle powder.

### Evaluation Example

A formation process was performed by keeping the lithium batteries of Example 1 and Comparative Example 1 at room temperature (25°C) for 20 hours.

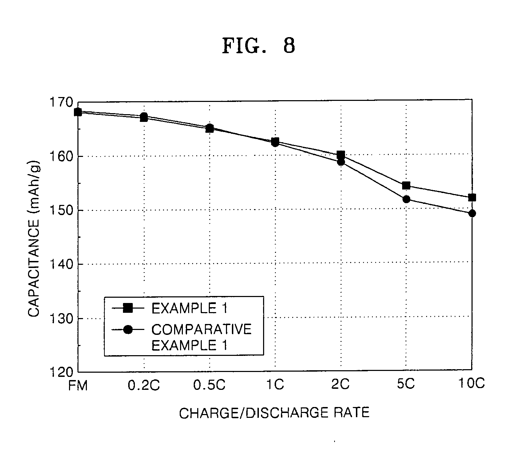

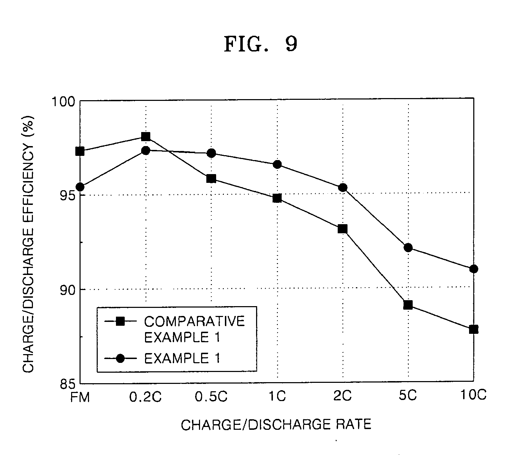

The capacity and the charge/discharge efficiency of the lithium batteries according to Example 1 and Comparative Example 1 that undergone the formation process were measured during one cycle of charging and discharging, wherein the charging was performed at a constant current (CC), a constant voltage (CV) of 0.01V and a charge/discharge rate of 0.2C under a cut-off current of 0.01 C, and the discharging was performed at a current of 0.2C under a cut-off voltage of 1.1 V. In addition, the charge/discharge rate was varied to 0.5C, 1C, 2C, 5C and 10C, and the capacities and charge/discharge efficiencies of the lithium batteries at the different charge/discharge rates were measured. The results are shown in FIGS. 8 and 9.

Referring to FIG. 8, the lithium battery of Example 1 had higher capacities at high rates compared to the lithium battery of Comparative Example 1.

Referring to FIG. 9, it can be seen that the lithium battery of Example 1 had a higher charge/discharge efficiency than the lithium battery of Comparative Example 1.

As described above, a conductive nanoparticle and a conductive nanoparticle powder according to the present embodiments have excellent conductivity, and thus a lithium battery according to the present embodiments containing the conductive nanoparticle powder may have improved capacity characteristics and charge/discharge efficiency.

It should be understood that the exemplary embodiments described therein should be considered in a descriptive sense only and not for purposes of limitation. Descriptions of features or aspects within each embodiment should typically be considered as available for other similar features or aspects in other embodiments.

## Claims

1. A conductive nanoparticle having a structure in which n polycyclic nano-sheets are stacked upon one another perpendicular with respect to a first plane, wherein each of the polycyclic nano-sheets includes hexagonal rings of six carbon atoms linked to each other, the hexagonal rings being fused to one another and arranged on the first plane,
wherein n is an integer from 2 to 100; and
wherein L₁ denotes a distance between a first carbon and a second carbon and L₂ denotes a distance between a third carbon and a fourth carbon arbitrarily selected from the n polycyclic nano-sheets;
wherein the third and fourth carbons are neither identical to each other nor the same as the first and second carbons, and the first and second carbons are selected from the n polycyclic nano-sheets of the conductive nanoparticle;
wherein L₁≥L₂ and;
wherein in a 3D x, y and z coordinate system, the second carbon is located at B(a, b, c) with respect to the first carbon located at the origin A(0, 0, 0), a and b are each independently about 10µm or less, and c is about 100 nm or less.

2. A conductive nanoparticle according to claim 1, wherein the first and second carbons are the two carbon atoms with the largest distance therebetween from among all carbon atoms in the n polycyclic nano-sheets.

3. A conductive nanoparticle according to claim 1 or 2, wherein adjacent carbon atoms in the polycyclic nano-sheets are linked via an sp² bond.

4. A conductive nanoparticle according to any one of claims 1 to 3, wherein each of the polycyclic nano-sheets has a thickness in the range of {atomic diameter of carbon} ± 1 nm.

5. A conductive nanoparticle according to any one of claims 1 to 4, wherein n is an integer from 2 to 10.

6. A conductive nanoparticle according to any one of claims 1 to 5, wherein c is in the range of {atomic diameter of carbon X 50} ± 10 nm.

7. A conductive nanoparticle according to any one of claims 1 to 6, wherein c is from about 0.1 nm to about 50 nm, optionaly wherein c is from about 0.1 nm to about 20 nm.

8. A conductive nanoparticle powder comprising a plurality of conductive nanoparticles as set out in any one of claims 1 to 7.

9. A conductive nanoparticle powder according to claim 8, wherein d₅₀ of c is in the range of {atomic diameter X 50} ± 10 nm; and/or
wherein the d₅₀ of c is from about 0.1 nm to about 50 nm, optionally wherein the d₅₀ of c from about 0.1 nm to about 20 nm.

10. A conductive nanoparticle powder according to claim 8 or 9, wherein the conductivity of the conductive nanoparticle powder is from about 700 to about 1,500 S/cm based on 2.5 g/cc of the conductive nanoparticle powder.

11. A lithium battery comprising:
a positive electrode containing a positive active material;
a negative electrode containing a negative active material; and
an electrolyte,
wherein at least one of the positive electrode and the negative electrode comprises a conducting agent containing a conductive nanoparticle powder according to any one of claims 8 to 10.

12. A lithium battery according to claim 11, wherein the conducting agent further comprises at least one first material selected from the group consisting of carbon black, ketchen black, acetylene black, artificial graphite, natural graphite, copper powder, nickel powder, aluminum powder, silver powder, and polyphenylene.

13. A lithium battery according to claim 11 or 12, wherein the conducting agent further comprises carbon black in a ratio of from about 1:10 to about 10:1 by weight with respect to the conductive nanoparticle powder.

14. A lithium battery according to any one of claims 11 to 13, wherein one of the positive active material and the negative active material comprises a lithium titanate.

15. A lithium battery according to any one of claims 11 to 14, wherein the positive active material comprises LiₐNi_{b}Co_{c}Mn_{d}GₑO₂, wherein 0.90 ≤ a ≤ 1.1, 0 ≤ b ≤ 0.9, 0 ≤ c ≤ 0.5, 0 ≤ d ≤0.5, and e=0, or LiMn₂O₄.
